# EUROPEAN PATENT APPLICATION

(11) **EP 4 748 461 A1**
(43) Date of publication of application: **27.05.2026**
(21) Application number: 25217645.8
(22) Date of filing: 21.11.2025
(51) Int. Cl.: A63F 13/355, A63F 13/50

(54) **STREAMING SYSTEM AND METHOD**

(30) Priority: 26.11.2024 GB 202417308
(71) Applicant: Sony Interactive Entertainment Inc., Tokyo 108-0075 (JP)
(72) Inventor: CURRIUS, Roc, London, W1F 7LP (GB); GUPTA, Rajeev, London, W1F 7LP (GB); CHOWDHURY, Pinaki, London, W1F 7LP (GB)
(74) Representative: D Young & Co LLP

(57) **Abstract**

A streaming method for interactive content comprises the steps of starting generation of a first frame of content that reflects a current state of an application, the generation comprising a multi-stage process; receiving via a network from a client device input data that affects the state of the application, during the generation of the first frame; evaluating progress of the generation against a first criterion; responsive to the evaluations against the first criterion, stopping generation of the first frame of content; updating the current state of the application responsive to the input data; and generating a second frame of content that reflects an updated state of the application; and outputting the generated second frame and not the stopped first frame.

## Description

### Field of the invention

The present invention relates to a streaming system and method.

### Description of the Prior Art

Conventionally, videogames have been played using PCs or consoles that generate the game content locally. However, recently so-called cloud gaming or game streaming has become popular. In this case, the game is executed in the cloud, and streamed to the player's client device. Notably therefore the client device itself need not be capable of natively executing the game, broadening access to it.

However, one issue with game streaming is the potential for lag or delay between user inputs for upload to the cloud server, and updated game images streamed down from the cloud server.

The present invention seeks to address or mitigate this problem.

### SUMMARY OF THE INVENTION

Various aspects and features of the present invention are defined in the appended claims and within the text of the accompanying description.

In a first aspect, a streaming method for interactive content is provided in accordance with claim 1.

In another aspect, a streaming server for interactive content is provided in accordance with claim 13.

In another aspect, a streaming system for interactive content is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device suitable as a client or server in accordance with embodiments of the description.
- Figure 2 is a schematic diagram of a streaming system for interactive content in accordance with embodiments of the description.
- Figures 3A&B are schematic diagrams of frame and input timings in accordance with embodiments of the description.
- Figures 4A&B are schematic diagrams of frame and input timings in accordance with embodiments of the description.
- Figure 5 is a schematic diagram of a multi-stage rendering process in accordance with embodiments of the description.
- Figures 6A, B, & C are schematic diagrams of frame and input timings in accordance with embodiments of the description.
- Figure 7 is a schematic diagram of three views of a handheld controller in accordance with embodiments of the description.
- Figure 8 is a flow diagram of a streaming method for interactive content in accordance with embodiments of the description.

### DESCRIPTION OF THE EMBODIMENTS

A streaming system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

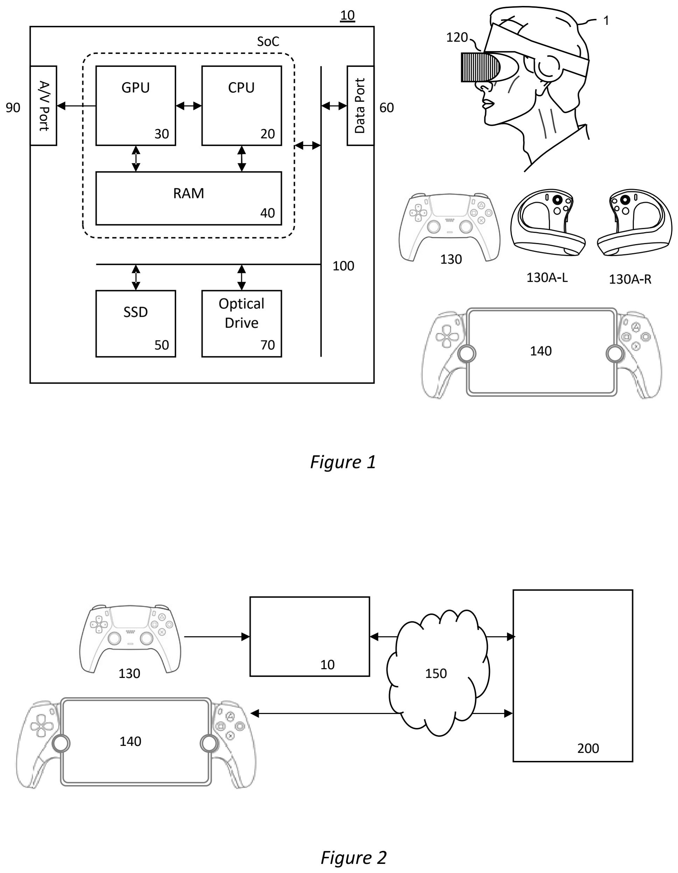

Referring now to the drawings, wherein like reference numerals designate identical or corresponding parts throughout the several views, Figure 1 shows an example of an entertainment system 10 such as a computer or console.

Depending on the role it is configured for (e.g. by suitable software instruction), the entertainment device may operate either as a cloud game server, or as a client device, and is used as an example for both herein.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50.

The entertainment device may transmit or receive data via one or more data ports 60. It may also optionally receive data via an optical drive 70. Audio/visual outputs from the entertainment device are typically provided through one or more A/V ports 90 or one or more of the data ports 60. Where components are not integrated, they may be connected as appropriate either by a dedicated data link or via a bus 100.

Examples of a device for displaying images output by the entertainment system include a head mounted display 'HMD' 120 worn by a user 1, a TV (not shown), and a portable screen 140.

Interaction with the system is typically provided using one or more handheld controllers 130, 140, and/or one or more VR controllers (130A-L,R) in the case of the HMD.

Referring now to Figure 2, entertainment device 10, in cooperation with a controller such as handheld controller 130, communicates with a cloud server 200 via a network 150 such as the internet. The entertainment device receives input signals from the controller, and relays them (or a parsed version of them, for example input IDs and values rather than raw signals) to the cloud server 200. The cloud server receives these inputs and uses them in the game being run on the server, typically as if the inputs were conventional local inputs so that the game can operate transparently. The output of the cloud server (video images and typically also audio) are then streamed back to the entertainment device via the network. Similarly a device 140 with built-in controller inputs can interact with the server in a similar manner.

However, the round trip in the network from the entertainment device to the cloud server, and from the cloud server to the entertainment device, can introduce lag compared to what would be experienced during local play. Typically, the round trip network latency for the player input and the server output may be in the order of 10-20 milliseconds each way.

This may seem small, but typically videogames aim to run at 60 frames per second in order to feel responsive for the user. Consequently there is normally only a 16 millisecond period between frames during which the game state is updated, and therefore a variable input delay of a similar order of time can significantly affect the apparent responsiveness of the game.

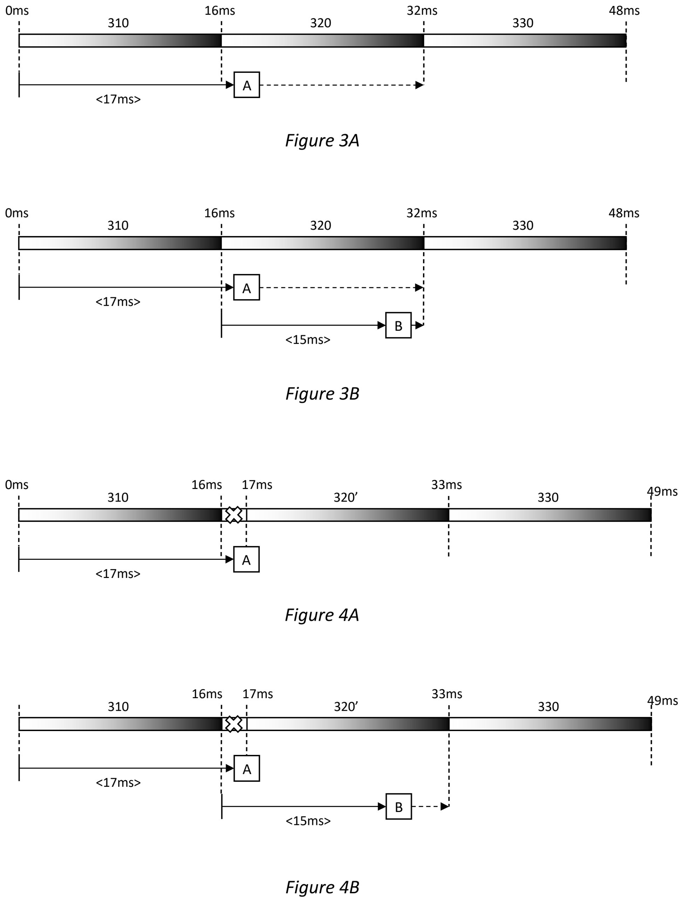

Referring now to Figure 3A, this shows three example frames 310, 320, 330 each of 16ms duration (the shading is a notional indication of progress to completion of the respective frame). The figure also shows an input action time at 0ms at which a user provided an input to their controller. If the controller has been local to the game, the input would have been provided to the game at 0ms and reflected in the first output image generated at 16ms.

However, in this case the input [A] was packaged and transmitted to a server instance of the game, and arrived at 17ms. As a result it was received after the first output image had been generated, and also after the start of generation of the second output image. It therefore has to wait until the start of the third output image at 32ms to be used, and the input is only reflected in the third output image at 48ms (which may then be received by the user after a further 10-20ms network delay).

Hence the local responsiveness of ~16ms has become a network responsiveness of ~48-68ms.

It would be very desirable to reduce this delay in responsiveness.

The variability in network lag can also produce other problems. Referring now to Figure 3B, in this case the next input [B] from the controller was packaged and sent at the next frame interval of 16ms (for example), but reached the server in 15ms instead of 17ms like the first input package.

As a result, both inputs A and B could be applied to update the game state at 32ms. However, there is no guarantee that they are compatible; [A] could indicate a button was pressed, and [B] that it was not - which input is now the correct one to use? Should [A] be used (otherwise the button press is never registered) or, if it was just the end of a longer button press conveyed in earlier input packages, is it better to use [B] to more accurately reflect the player's timings? Moreover, what part of the system makes this decision, if the game itself is operating transparently (i.e. is assuming it is running on a normal, locally controlled, system, and has not additional code to handle these circumstances)?

Again it would be desirable to avoid such input contention issues.

In short, because there is no correlation between when the game needs inputs to update the game state, and when the inputs actually arrive over the network, the inputs may incur unwanted delays waiting for the next frame, or clash with each other within a given frame.

As noted above, a network delay can result in nearly an extra 32 milliseconds of delay. In a network with a ping time of 10-20ms each way, this can result in a total delay that feels too unresponsive. Meanwhile for a user with a fast ping time of 2-10ms each way, the extra delay represents the majority of the total delay, and may still be frustrating for the user. Meanwhile, in any competitive environment (e.g. e-sports), any additional delay is undesirable.

Accordingly, in embodiments of the present description, when an input package is received by the server after the generation of a new frame has started, that new frame is dropped, and a replacement frame is started based on the received input. This frame dropping scheme may be achieved by the operating system intervening in the rendering pipeline to reset it, or resetting the frame generation loop in the game. It may be that the operating system requires configuration data for a specific game title indicating what variables or memory values to change in order to impose this modification on the game.

Alternatively, a game may be simply coded or updated to reset its frame generation loop in response to an API call from the OS indicating the arrival of new inputs, or upon receiving new input data in a designated memory area that the game monitors, or the like.

In any event to a first approximation, when new inputs are received, the current frame generation is abandoned, the game state is updated in response to the inputs, and a new frame generation is started.

Hence referring now to Figure 4A, at time 16ms, Frame 320 starts to be generated, but at 17ms new input [A] is received. As a result frame 320 is abandoned (signified by the X in Figure 4A), and new frame 320' is started. As a result the total delay before an image reflecting the user's input is generated has been reduced from 48ms to 33ms, and the game feels more responsive to the user as a result.

Referring now also to Figure 4B, to a second approximation, this approach is subject to a timing threshold. The timing threshold is set so that an input may incur a small delay to avoid creating a long delay between output images, or a lack of response to a preceding output image.

Hence Figure 4B replicates the input timings of Figure 3B. In this case, Input [B] is received after 15ms, at time 31ms. However in this case it would not be beneficial to abandon frame 320'; this would mean that an image reflecting the input [A] would again not be output for a total of about 48 or 49ms. It would also mean that a significant amount of rendering data would need to be flushed from the system, all to avoid an additional delay to input [B] of 2ms.

Accordingly, where the delay incurred by not dropping the current frame is below a predetermined amount, then the current frame is not dropped. The predetermined amount may be any amount up to, for example, half the frame generation duration.

To avoid the possibility of a situation where inputs consistently arrive early enough in the frame generation period (e.g. if the network delay is consistently 10ms, and the drop threshold is after 12ms) and so there is a consistent dropping of current frames, and no frame actually gets output, then the above approach may have a hysteresis applied such that it can only occur in isolation, and not for two or more frames in a row (or for a predetermined maximum number of frames in a row).

Using the above techniques to the first or preferably second approximations, the average delay between user inputs and the user seeing the results is advantageously reduced by about one frame's duration - typically 16ms - and contention issues are also avoided.

Notably, the above approaches can be further refined to improve overall efficiency and potentially reduce the delay even more.

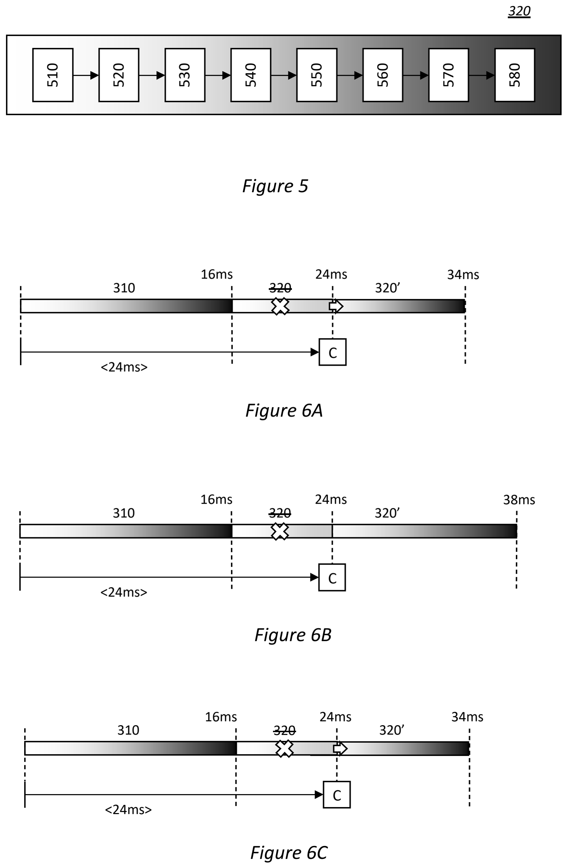

Turning to Figure 5, the process of generating an image frame over 16ms comprises multiple stages.

After the game logic (game state) has been updated, the pipeline comprises some or all of the following (and potentially other steps not included here), in roughly, but not necessarily, the order given.

Geometry update (510)
- The geometry of the environment to be rendered may be updated if there are new elements to show, or if elements have changed. Similarly, changes in character animation/pose may be defined.

### Z-buffer update (520)

- What aspects of the environment are visible is updated depending on the geometry and the virtual camera viewpoint - parts that are unseen need not be processed, or only processed to a limited extent.

### Texturing (530)

- Texture maps are used to apply basic graphical imagery to the geometry of the scene. Typically different textures are used as a function of distance from the viewpoint.

### Static Lighting (540)

- Lightmaps may be used for direct and indirect lighting, shadows, and reflections.

### Dynamic lighting (550)

- Direct and indirect lighting, shadows, and reflections may be computed for dynamic in-game light sources such as a player's torch.

### Atmospherics (560)

- Effects such as mist or fog, particle effects, translucency (water) and the like.

### Post processing (570)

- A variety of effects that may be applied, often to the image as a whole, including bloom, exposure, depth of field bokeh, lens effects, and the like.

### Upscaling (580)

- If, in order to achieve a preferred frame rate, the rendering has been performed at a lower resolution than intended, some systems have a machine learning based Al upscaling step to inpaint the rendered image up to the target resolution.

Whilst these stages are illustrated at equal size in Figure 5, in practice some stages take longer than others, and some may overlap or be revisited during the rendering process. Similarly, as noted above some stages may occur in a different order to that listed. However, in general the image is formed using successive stages.

Accordingly, in embodiments of the present description, to a third approximation when dropping the generation of a frame, only those stages of the generation process are dropped that would change in response to the received input.

As will be discussed later herein, 'change in response' may mean change by a threshold amount in response', but to the third approximation a threshold might not be considered.

Hence for example, in the case of a movement input that changes the viewpoint of the game (e.g. moves the player character), typically at least the geometry and animation 510 of the rest of the environment could be retained, and would not need to be generated again, as the viewpoint is of the same environment.

Typically stages 520-540 could also be retained; the z-buffer update (z-culling) is typically viewpoint dependent, but for small changes in viewpoint, as may occur in a 16ms increment of time, several strategies are possible:
- the z-buffer could be deliberately set up to not cull surfaces up to an obscured edge, but retain a small obscured boundary, so that a small part of the unseen image is rendered in case it is revealed by an updated viewpoint.
- The z-buffer could be re-run for just those parts of the environment previously tagged as unseen, and textures added for any newly revealed pixels
- The z-buffer could be left as-is, on the assumption that any marginal errors would be minor and only seen for 16ms; optionally, these errors might be concealed using interpolation or other inpainting techniques.

Dynamic lighting stage 550 may only be relevant to a change in input if there currently is dynamic lighting, and further may only be relevant if that lighting would be affected by the change - for example if the light source was a torch held by the player's avatar, and was being caused to move either itself or as part of an avatar animation that itself would change as a consequence of the input. Hence for example Dynamic lighting may be retained or ignored unless the input would result in a light moving laterally within the image.

Stage 560 may also be retained, optionally for a subset of atmospheric effects; for example fog is unlikely to change noticeably in response to inputs 16ms. Meanwhile particle effects might be noticeable, particularly if they are in the foreground or serve to visibly populate a volume of space and hence have a clear parallax when the viewpoint moves laterally. Hence all, some, or no atmospherics may be retained depending on which atmospherics are used and optionally what inputs have been received (or equivalently and potentially more accurately, what changes of game state they have caused, since an input to turn left will have no effect if a left turn is currently not possible in-game).

A similar approach may be used for post-processing, where there is a suite of effects, not all of which are used on a given image, and not all of which will be materially affected by every type of input.

At this point, the rendered image is essentially complete and so, as discussed with respect Figure 3B about keeping frame 320, typically at some point during the frame generation stages it becomes more efficient to proceed to the end an output the image.

However, optionally in this case for some inputs (in particular movement inputs that change the viewpoint), reprojection (for lateral changes of viewpoint) and/or zooming (for depth changes of viewpoint) could be used to update the final image to incorporate the change due to motion.

Meanwhile typically upscaling is only performed on a finalised image. Typically if an image has reached an optional upscaling stage, it would be more efficient to let that image complete upscaling and be output (e.g. for similar reasons given for outputting frame 320 in respect to Figure 3B).

Optionally reprojection and/or zoom could be used after upscaling if not used before, but potentially if inputs have only been received that this stage it may be considered preferable to use them for the next image frame in any case.

Hence to the third approximation, those parts of the current frame generation process that can be re-used in light of the newly received inputs and/or their effect on the game state may be retained for the replacement image frame, typically meaning that the next image frame can take less than 16ms to generate.

Thus, referring now to Figure 6A, in an example where an input [C] is delayed by 24ms (halfway into the generation time of the next frame), second frame 320 is already being generated and has for example got as far as applying textures. In this example, the geometry and textures can be re-used (denoted by the large arrow between 320 and 320'), and as the user is currently running forwards in the game there is no significant change to the z-culling. Hence all the rendering process up to this point can be recycled, and the new image 320' can continue to be rendered but with the viewpoint moved forward responsive to the input. As a result the image is output for example at 34ms (rather than at 32ms, assuming that there is a small overhead of e.g. 2ms in checking the rendering pipeline for re-use, and any small corrections required).

Meanwhile in the case of Figure 6B, again input [C] is delayed by 24ms, and again second frame 320 has for example got as far as applying textures. In this case however, the inputs mean that the z-buffer should be assumed to be out of date (e.g. the input may indicate a crouch button has been pressed, likely affecting foreground occlusion, or a jump button, changing the viewpoint position by a significant amount).

Hence in this case, only the geometry should be recycled, and the new image 320' rendered from that point. Hence in this case only the geometry generation time has been saved (e.g. 4ms of processing) and so, with an assumed +2ms overhead, the new image is output at 24ms+14ms = 38ms.

Thus whilst savings on time can be made by partially re-using the rendering pipeline of the previous, abandoned image, the amount of savings may vary from instance to instance based on a combination of factors relating to what stages of the pipeline have been performed, what they included, and what the received inputs were (or what where their effects on the game state).

Accordingly, to a fourth approximation, the rendering pipeline can be tuned to improve the performance gained from the third approximation.

As noted previously, to a third approximation, when dropping the generation of a frame only those stages of the generation process are dropped that would change in response to the received input.

In the fourth approximation, 'change in response' may mean change by a threshold or assumed amount in response, and the rendering pipeline may be restructured to reach that amount occur later in the process of generating a frame, so that more of the rendering pipeline can typically be re-used.

It will be appreciated that some elements of a scene are more likely to change, or change more, in response to inputs than others - at least within a 16ms window.

In particular, elements of the environment at a greater distance from the user's viewpoint are less likely to need changing. Changes in viewpoint caused by player movement result in progressively less change in rendered position as distance increases, due to parallax. Optionally a threshold level of change may be chosen, such as less than one pixel, or less than two, three, or four pixels, etc. For a given allowed speed of movement of the user, this in turn can be used to calculate the effective distance from the viewpoint beyond which any change in viewpoint in one frame will be less than the threshold level. That distance can then denote the start of the 'background' region of the scene.

Alternatively, it will be known that in games, often scenes are rendered using respective levels of detail (LoDs) which are usually a function of distance from the virtual camera viewpoint, with LoD 0 being the most detailed, with detail dropping off at LoD 1, LoD 2, etc.

Accordingly, alternatively or in addition a distance from the virtual camera viewpoint may be chosen according to the process used to select respective LoDs, with that distance denoting the start of the 'background' region of the scene.

Hence optionally, in order to improve the chances of parts of the rendering pipeline being re-cycled in the event of a frame interruption upon receipt of new input data, the pipeline can render as much as possible for that part of the environment that is in the background, where 'background' is determined to be one selected from the list consisting of: a distance beyond which an inter-frame positional change is likely to be less than a threshold amount of N pixels, where N is for example 1, ..., 10; a distance at which a selected lower LoD is used (e.g. LoD 1, LoD 2, LoD 3, LoD 4, etc), or a distance determined empirically as a good trade-off between visual fidelity and reduced delay.

Hence for example the geometry of some or all of the scene could be calculated, and typically also the z-culling, but then texturing and other processes could be applied first to the 'background' section of the scene, before applying them to the foreground part. In this way, if the rendering pipeline of the frame is interrupted (for example in the first half of the frame period) then it is likely that most of the rendering done up to that point can be re-used. Possibly the z-culling for the foreground may need to be repeated if the game state updates the positions of some foreground objects. For example, the most frequently updated part of a scene is typically the user's own avatar, and/or a non-player character they are interacting with - both of which tend to be in the foreground.

Hence in Figure 6C, the scenario of Figure 6B is shown, but this time the rendering pipeline has been structured to render the background first. In this case, as a result when new inputs are received at 24ms, all of the rendering up to that point can be re-used with the updated game state, which (for example) only results in the start of a change to the avatar's pose to change a weapon, whilst also moving forward.

Comparing Figure 6C and 4B (in which inputs arriving much late wait for the next frame), it is apparent that a well-scheduled rendering pipeline can avoid discarding some or all of the rendering of the current frame for most timings during which new inputs may arrive - either because the background was rendered first and is not affected - or affected below a threshold - by the change, or because the input has arrived late enough that the delay to reflecting the new input would not outweigh the delay that would be imposed on reflecting the current input in the rendered output. As noted above, that point of equilibrium is roughly halfway through the generation of the current frame, but could be chosen to be later.

Thus to a fourth approximation, at least partially rendering a background part of the scene first can reduce the amount of rendering that needs to be discarded when switching to a new frame in response to received inputs, with the background being defined in one of several ways but generally as that part of the scene that is not, or not significantly, affected by changes in game state due to inputs within the frame period.

Finally, alternatively or in addition, a fifth approximation may be considered. As noted above, parts of the scene may not be significantly affected by changes in game state due to inputs within the frame period. To a fifth approximation it will be appreciated that the amount of change to the visible game state will differ for different inputs. This has been partly alluded to elsewhere herein, with references to crouching versus moving forwards, for example - but it can also be generalised based on the input assignments, and/or the nature of the physical controller inputs themselves.

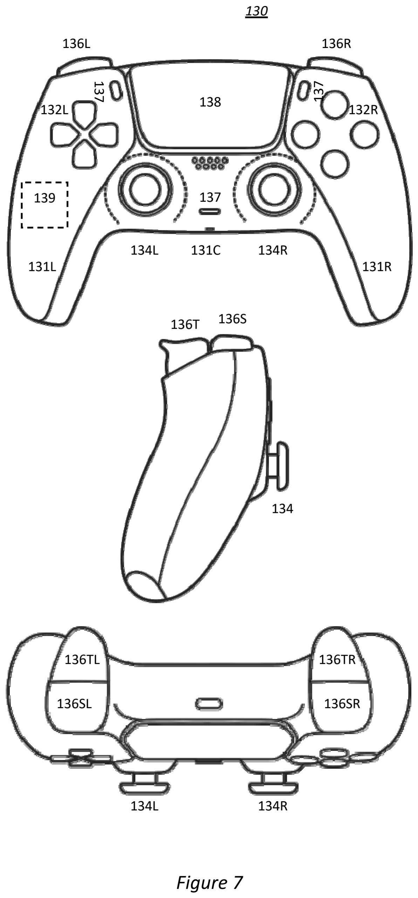

Referring now to Figure 7, this shows an example of handheld controller 130 seen from three different viewpoints. Such a controller typically has two handle sections 131L,R and a central body 131C. Various controls are distributed over the controller, typically in local groups. Examples include a left button group 132L, which may comprise directional controls, and similarly right button group 132R, which may comprise function controls. The controller also includes left and/or right joysticks 134L,R, which may optionally also be operable as buttons by pressing down on them, and shoulder buttons 136L,R. These in turn may comprise a shoulder button 136S and a trigger button 136T, to provide four buttons in total. Other buttons may be included (not shown) such as buttons on the rear body of the controller or handles.

The controller (typically in the central portion of the device) may also comprise one or more system buttons 137, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 138, a light for optical tracking (not shown), a screen (not shown), haptic feedback elements (not shown), motion detection (139), and the like.

For system buttons 137 unrelated to gameplay, optionally the system need not abandon the current frame at all, and the system can wait until the next frame to generate the system interface imagery.

For function controls 132R, these may not affect the virtual camera viewpoint (this may be a game dependent aspect) or not all of them affect the virtual camera viewpoint. Consequently when one of these is pressed, the system may for example drop any foreground processing (as per the fourth approximation) or more generally any affected processing (as per the second approximation) unless the input is received late in frame generation (as per the second approximation). Hence more generally still, the system may only drop frames or partially drop frames for re-use for specific ones of these controls, and not drop frames for others, depending on the functions assigned to these controls. Hence some function controls may be deliberately excluded from the frame dropping scheme.

It will also be appreciated that, in particular for functional controls and other 'binary' (active/not active) controls, it is the change of input state that is relevant to a change of game state. Hence for example it would be unusual for a user to press the 'jump' button for only 16ms - but once the jump has been triggered, the continued pressing of the button over the duration of a number of subsequent frames does not change the game behaviour any further, and so can be ignored. It will be appreciated that for some games there are inputs that correspond to long press or short press inputs, but then the transition from a short press to a long press can be recognised as the start of the new (type) of input.

Meanwhile for directional controls 132L, as noted previously motion forward is relatively easy to accommodate by zooming the resulting image frame by an amount proportional to the distance moved forward during the frame or optionally the part thereof represented by the arrival of the input.

Meanwhile again as previously noted, motion to the left or right (panning) may result in the virtual camera position moving during one frame period, to a sufficient extent that it is necessary to change some or all of the render pipeline. As noted previously this may require flushing the entire pipeline, or it may allow for retaining one or more of stages 510-540. If the pipeline is arranged to process background elements first, it is possible that more of the pipeline for these elements can be retained because the change to the background due to the motion is below a predetermined acceptable threshold.

Hence for 'binary' motion inputs (i.e. motion that is on or off), the frame dropping scheme may depend on the direction of travel, the rate of travel, whether the input is a redundant continuation of an input, and whether rendering is scheduled at least in part as a function of distance to at least partially render the foreground later than the background.

In addition to binary inputs such as simple buttons, controllers may also comprise analogue or continuous inputs. Such inputs may include joysticks (134) , triggers (136T), touchpads (138), mice, and motion detectors.

Typically these inputs provide activation values, or positional values, that change over time. Consequently, for these inputs, the frame dropping scheme herein, for any of the approximations described, may optionally also apply delta thresholds to these analogue / continuous inputs.

In other words, if a value from one of these inputs is received (for example as part of input data [A], [B] or [C] as referred to elsewhere herein), then this is compared to the previously received corresponding input value. If the different in value (the delta) is less than a threshold amount then it implies that the user is still doing the same thing, or has not changed the input enough for it to be noticeable within the current frame period, and so the input can wait until the next frame to be used.

Put crudely, the threshold can act as a test of whether the input is a continuation of the preceding input, or should be treated as a new input within the period of the current frame. Hence for example if the value changes enough to have a visually significant impact might it be acted upon to interrupt the current frame according to the schemes herein. It will be appreciated that the threshold may be different for each type of input.

This test can also be used for example in relation to the timing threshold approach of the second approximation. Hence for example if the last input was visually significant, but the new input is not, then the timing threshold can be adjusted in favour of reducing delay to the representation of the last input (i.e. continue with current frame even if new input is relatively early). By contrast if the last input was not visually significant but the new one is, then the opposite weighting can be considered (i.e. interrupt the current frame even if new input is relatively late).

Hence in summary, in embodiments of the present description, some inputs from the controller may in effect be ignored for the purposes of deciding whether to interrupt generation of the current frame, such as for example system buttons and some function buttons. Meanwhile some inputs from the controller may wholly or partially result in dropping parts of the rendering pipeline, for example depending on how they affect the virtual camera position.

Separately the above considerations may also apply to analogue inputs, but alternatively or in addition these may optionally be subject to delta thresholds indicating whether the user has changed their analogue/continuous input by more than a threshold amount.

And in all these cases, optionally these interruptions may be subject to global or input-specific override rules such as the timing threshold of the second approximation.

As noted elsewhere herein, the interruption of a frame, and, to some approximations, the total or partial discarding of the existing render pipeline ahead of generating an updated image, may optionally depend on factors such as the function of a given input button or other input, and optionally on in-game factors such as the effective speed of the virtual camera position during movement. Accordingly, optionally a configuration file may be associated with a game title, and either bundled with the title or downloaded separately for example by the OS or a helper app, to provide this information to the frame dropping scheme.

Similarly, depending on how the frame dropping scheme is implemented, such a configuration file may also include information indicating what variables or memory values to change in order to trigger a frame interruption in the game according to any of the approximations described herein, or to specify API values in the case where the game may communicate with the OS or helper app to this end.

In this way, the OS or helper app of the OS can act to reduce the overall latency for cloud streaming games that is caused by uncorrelated timing between frame generation at the cloud server and inputs send from the client device via the network. It will be appreciated that this can apply to any game (or indeed, any streamed app or interactive content), improving the general effective responsiveness of the cloud streaming server.

### Summary

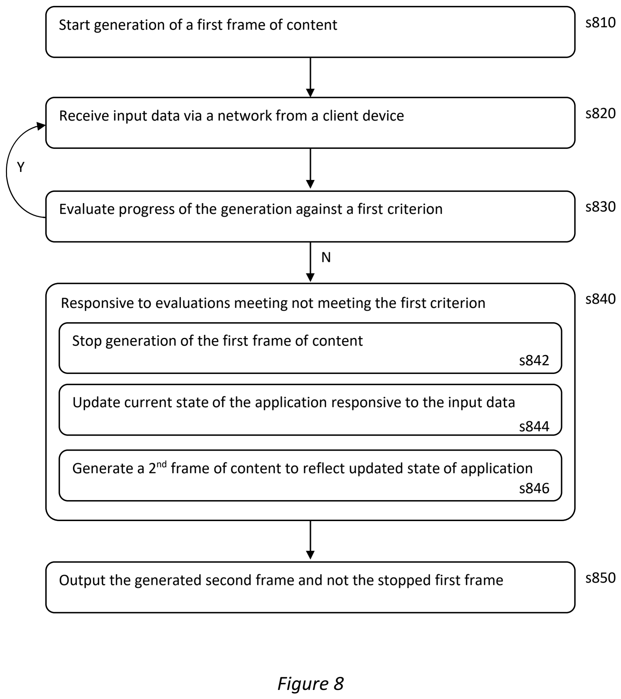

Referring now to Figure 8, in a summary embodiment of the present description a streaming method for interactive content comprises the following steps.

In a first step s810, starting generation of a first frame of content that reflects a current state of an application (e.g. a game), the generation comprising a multi-stage process (e.g. stages of a rendering pipeline), as described elsewhere herein.

In a second step s820, receiving via a network from a client device input data that affects the state of the application, during the generation of the first frame, as described elsewhere herein.

In a third step s830, evaluating progress of the generation against a first criterion, as described elsewhere herein. It will be appreciated that depending on the criterion and/or how it is formulated for evaluation, the following steps may be in response to meeting a criterion, or not meeting a criterion.

In a further step s840, then as described elsewhere herein, responsive to the evaluations against the first criterion (e.g. an evaluation that triggers the following steps to interrupt and wholly or partially replace the first frame), the following sub-steps occur.

In sub-step s842, stopping generation of the first frame of content, as described elsewhere herein.

In sub-step s844, updating the current state of the application responsive to the input data, as described elsewhere herein.

And in sub-step s846, generating a second frame of content that reflects an updated state of the application, as described elsewhere herein.

Then, in step s850, outputting the generated second frame and not the stopped first frame (e.g. for encoding and transmission/streaming to the client device), as described elsewhere herein.

It will be apparent to a person skilled in the art that variations in the above method corresponding to operation of the various embodiments of the apparatus as described and claimed herein are considered within the scope of the present invention, including but not limited to that:
- the first criterion is whether the generation of the first frame has reached a predetermined stage of the multi-stage process, as described elsewhere herein. It will be appreciated that one predetermined stage may to all intents and purposes mean that the first frame is complete, and so the generation process is not stopped, whilst another predetermined stage may mean that some of the multi-stage process can be re-used, and another predetermined stage may mean that the process for the first frame is completely discarded.
- the first criterion is whether the generation of the first frame has occupied a predetermined threshold amount of time, and/or has less than a threshold amount of time to completion, as described elsewhere herein. Such a timing criterion may be used to determine a trade-off between delaying graphical representation of newly received inputs and delaying graphical representation of previously received inputs.
- stopping generation of the first frame of content comprises the steps of determining what change of state of the application is caused by the input data (e.g. whether or not the virtual camera position changes, or the like), discarding the generation results of those stages of the multi-stage process affected by the change of state, and at least partially re-using the generation results of those stages not affected by the change of state when generating the second frame, as described elsewhere herein.
   - In this instance, optionally whether or not a stage of the multi-stage process is affected by the change of state is subject to a degree of effect threshold (i.e. a tolerable degree of change), as described elsewhere herein.
- generation of a first frame of content comprises scheduling the generation of two or more different parts of the content in the first frame according to the likelihood that they can be re-used in the second frame, as described elsewhere herein.
   - In this instance, optionally the two or more different parts of the content are separated as a function of one or more selected from the list consisting of distance from a virtual camera viewpoint, level of detail ascribed to a part of the content, whether the part of the content corresponds to a currently animated element of the content, and whether the part of the content corresponds to a user character or a non-player character that the user is currently interacting with, as described elsewhere herein.
- The method comprises the steps of evaluating the input data against a second criterion, and generating the second frame responsive to the evaluations against the first criterion and the second criterion, as described elsewhere herein. Again it will be appreciated that depending on the criterion and/or how it is formulated for evaluation, the response may be to meeting a criterion, or not meeting a criterion.
   - In this instance, optionally the second criterion comprises whether an active input is expected to cause a change in a current state of an application that should result in the stopping of the generation of the first frame, and inputs that are not expected to cause such a change include one or more selected from the list consisting of an input that summons a user interface that is not part of the currently displayed content, an input corresponding to a function that does not affect the position or orientation of a virtual camera used to define the first frame viewpoint, and an input that is a continuation of a preceding input, as described elsewhere herein.
   - Similarly in this instance, optionally the second criterion comprises whether an active input from an analogue or continuous input mechanism has changed by more than a respective threshold amount from the value associated with a preceding generated frame of content, and if so, then stopping of the generation of the first frame, as described elsewhere herein.
- The method comprises the step of accessing a configuration file providing one or more selected from the list consisting of first criterion definitions relating to the multi-stage process, second criterion definitions for inputs to the application, data indicating what changes to runtime application values should be made to enact the stopping of the generation of the first frame, and data indicating what values to provide to an application programme interface to trigger the stopping of the generation of the first frame, as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a nontransitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring again to Figures 1 and 2, a streaming server for interactive content (e.g. entertainment device 10 or similar, operating as a server 200 or as part of such a server) comprises the following.

A streaming processor (e.g. CPU 20), configured (for example by suitable software instruction) to implement a streaming method comprising the steps of:
- starting (s810) generation of a first frame of content that reflects a current state of an application, the generation comprising a multi-stage process;
- receiving (s820) via a network from a client device input data that affects the state of the application, during the generation of the first frame;
- evaluating (s830) progress of the generation against a first criterion;
- responsive (s840) to the evaluations not meeting the first criterion,
   - stopping (s842) generation of the first frame of content;
   - updating (s844) the current state of the application responsive to the input data; and
   - generating (s846) a second frame of content that reflects an updated state of the application; and
- outputting (s850) the generated second frame and not the stopped first frame,
as described elsewhere herein.

Instances of this summary embodiment implementing the methods and techniques described herein (for example by use of suitable software instruction) are envisaged within the scope of the application, including but not limited to that the implemented streaming method comprises the step of evaluating the input data against a second criterion, as described elsewhere herein.

Finally, in a summary embodiment, a streaming system (for example the system shown in Figure 2) comprises the server (200) as described elsewhere herein, and one or more client devices (10, 140), as described elsewhere herein. Optionally the system may also comprise one or more controllers, if separate from the client device.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A streaming method for interactive content, comprising the steps of:
starting generation of a first frame of content that reflects a current state of an application, the generation comprising a multi-stage process;
receiving via a network from a client device input data that affects the state of the application, during the generation of the first frame;
evaluating progress of the generation against a first criterion;
responsive to the evaluation against the first criterion,
stopping generation of the first frame of content;
updating the current state of the application responsive to the input data; and
generating a second frame of content that reflects an updated state of the application; and
outputting the generated second frame and not the stopped first frame.

2. The method of claim 1, in which
the first criterion is whether the generation of the first frame has reached a predetermined stage of the multi-stage process.

3. The method of claim 1 or claim 2, in which
the first criterion is whether the generation of the first frame has one or more selected from the list consisting of:
i. occupied a predetermined threshold amount of time; and
ii. less than a threshold amount of time to completion.

4. The method of any preceding claim, in which
stopping generation of the first frame of content comprises:
determining what change of state of the application is caused by the input data;
discarding the generation results of those stages of the multi-stage process affected by the change of state; and
at least partially re-using the generation results of those stages not affected by the change of state when generating the second frame.

5. The method of claim 4, in which whether or not a stage of the multi-stage process is affected by the change of state is subject to a degree of effect threshold.

6. The method of any preceding claim, in which generation of a first frame of content comprises scheduling the generation of two or more different parts of the content in the first frame according to the likelihood that they can be re-used in the second frame.

7. The method of claim 6, in which the two or more different parts of the content are separated as a function of one or more selected from the list consisting of:
i. distance from a virtual camera viewpoint;
ii. level of detail ascribed to a part of the content;
iii. whether the part of the content corresponds to a currently animated element of the content; and
iv. whether the part of the content corresponds to a user character or a non-player character that the user is currently interacting with.

8. The method of any preceding claim, comprising the steps of:
evaluating the input data against a second criterion; and
generating the second frame responsive to the evaluations against the first criterion and the second criterion.

9. The method of claim 8, in which:
the second criterion comprises whether an active input is expected to cause a change in a current state of an application that should result in the stopping of the generation of the first frame; and
inputs that are not expected to cause such a change include one or more selected from the list consisting of:
i. an input that summons a user interface that is not part of the currently displayed content;
ii. an input corresponding to a function that does not affect the position or orientation of a virtual camera used to define the first frame viewpoint; and
iii. an input that is a continuation of a preceding input.

10. The method of claim 8 or claim 9, in which:
the second criterion comprises whether an active input from an analogue or continuous input mechanism has changed by more than a respective threshold amount from the value associated with a preceding generated frame of content, and if so, then
stopping of the generation of the first frame.

11. The method of any preceding claim, comprising the step of:
accessing a configuration file providing one or more selected from the list consisting of:
i. first criterion definitions relating to the multi-stage process;
ii. second criterion definitions for inputs to the application;
iii. data indicating what changes to runtime application values should be made to enact the stopping of the generation of the first frame; and
iv. data indicating what values to provide to an application programme interface to trigger the stopping of the generation of the first frame.

12. A computer program comprising computer executable instructions adapted to cause a computer system to perform the method of any one of the preceding claims.

13. A streaming server for interactive content, comprising:
a streaming processor, configured to implement a streaming method comprising the steps of:
starting generation of a first frame of content that reflects a current state of an application, the generation comprising a multi-stage process;
receiving via a network from a client device input data that affects the state of the application, during the generation of the first frame;
evaluating progress of the generation against a first criterion;
responsive to the evaluation not meeting the first criterion,
stopping generation of the first frame of content;
updating the current state of the application responsive to the input data; and
generating a second frame of content that reflects an updated state of the application; and
outputting the generated second frame and not the stopped first frame.

14. The streaming server of claim 13, in which the streaming method comprises the step of evaluating the input data against a second criterion.

15. A streaming system, comprising:
the server of claim 13 or claim 14; and
the client device.
